(19) **Europäisches Patentamt**

**European Patent Office**

**Office européen des brevets**

(11) **EP 1 503 550 A2**

(12) **EUROPEAN PATENT APPLICATION**

(43) Date of publication:
02.02.2005 Bulletin 2005/05

(51) Int Cl.⁷: **H04L 12/56**

(21) Application number: **04254422.1**

(22) Date of filing: **23.07.2004**

| | |
|---|---|
| (84) Designated Contracting States:<br>**AT BE BG CH CY CZ DE DK EE ES FI FR GB GR HU IE IT LI LU MC NL PL PT RO SE SI SK TR**<br>Designated Extension States:<br>**AL HR LT LV MK**<br><br>(30) Priority: **24.07.2003 JP 2003201251**<br><br>(71) Applicant: **Pioneer Corporation**<br>**Tokyo 153-8654 (JP)** | (72) Inventor: **Matsuura, Koji Pioneer Corporation**<br>**Tokorozawa-shi, Saitama 359-8522 (JP)**<br><br>(74) Representative: **Haley, Stephen**<br>**Gill Jennings & Every,**<br>**Broadgate House,**<br>**7 Eldon Street**<br>**London EC2M 7LH (GB)** |

(54) **Information processing device, its system, its method, its program, and recording medium storing the program**

(57) In a server unit (300), a clock-time comparator (313) acquires the scheduled decoding clock-time information for decoding a video packet and RTT for transferring the video packet to a client unit (400) via a network and computes the time necessary for retransmitting the video packet on the basis of RTT. If the clock-time comparator (313) determines that it cannot meet the scheduled decoding clock-time information when the video packet is retransmitted, a processing unit (314) adds an error correction code to the video packet and transmits it. If, on the other hand, the clock-time comparator (313) determines that it can meet the scheduled decoding clock-time information, the processing unit (314) adds an error detection code to the video packet and transmits it. Thus, either way can be selected depending on the status of transmission and hence it is possible to reduce the load of transmitting video data in order to output video data on a stable basis and improve the processing efficiency.

FIG.1

**Description**

The present invention relates to an information processing device for processing data transmitted or received via a network, its system, its method, its program and a recording medium storing the program.

Data transmission/reception systems including a server unit having data and adapted to transmit some of the data to a client unit via a network are known. Two types of techniques have been developed for data transmission in such data transmission/reception systems; one is error correction techniques for correcting errors in the data received at a terminal by using a forward error correction (FEC) code in order to prevent information from losing, a situation that can arise in non-guarantee type communication networks such as the Internet, and the other is error detection techniques (Automatic Repeat request: ARQ) for acquiring correct data by detecting data errors, using an error detection code, and requesting the server unit to retransmit the data. Arrangements for combining of the error correction technique and the error detection technique for data transmission/reception have also been developed in recent years (see, Japanese Patent Laid-Open Publication No. Hei. 10-190631, p.2, right column to p.5, left column).

With the technique disclosed in the above cited publication, a second piece of information is prepared by adding a first code for detecting or correcting errors to a first piece of information to be transmitted and a third piece of information is prepared by adding a second code for correcting errors to the second piece of information. The third piece of information is transmitted and received. Then, the received third piece of information is divided into the second code and the second piece of information and the errors in the second piece of information are corrected by using the second code. Thereafter, the corrected second piece of information is divided into the first piece of information and the first code and errors in the first piece of information are corrected or detected by using the first code. If the first piece of information is real time data such as audio data and video data, the real time data will not be acquired properly because of the delay that can arise for error corrections in the course of data reception and reproduction. Therefore, the first code is used as error correction (FEC) code and, if the first piece of information is storable data, a retransmission technique (ARQ) is used for processing, utilizing the first code as detection code.

However, the technique disclosed in the above cited publication is accompanied by a problem that a relatively large amount of information is required for correcting errors if compared with an error detection technique (ARQ) particularly when an error correcting technique using an error correction (FEC) code is employed for real time data communication so that the number of packets to be used for transmission is increased and, at the same time, the amount of arithmetic operations necessary for correcting errors is large to raise the load of processing for arithmetic operations. Additionally, a number of different techniques need to be selectively used for an error correction code depending on the circumstances of communication so that it is difficult to select an optimal technique that matches the communication environment.

In view of the above identified circumstances, it is therefore a principal object of the present invention to provide an information processing device that can be used to transmit and receive information efficiently depending on the circumstances, its system, its method, its program and a recording medium storing the program.

An information processing device for transmitting information via a network, according to the first aspect of the present invention is characterized by: acquiring a time necessary for processing information and a communication time necessary for transferring the information; computing a time necessary for retransmitting the information on the basis of the communication time; and transmitting the information with an error correction code added thereto when it is determined that the retransmission time exceeds the time necessary for processing the information, but transmitting the information with an error detection code added thereto when it is determined that the retransmission time does not exceed the time necessary for processing the information.

An information processing device for transmitting information via a network, according to the second aspect of the present invention is provided with: a clock-time acquiring unit for acquiring a clock-time for utilizing the information; a communication time acquiring unit for acquiring a communication time necessary for transferring the information; a clock-time comparator for computing a time necessary for retransmitting the information on the basis of the communication time and comparing the retransmission time and the utilization clock-time; and an information processor adapted to add an error correction code to the information when it is determined that the retransmission time exceeds the utilization clock-time as a result of the comparison by the clock-time comparator, but add an error detection code to the information when it is determined that the retransmission time does not exceed the utilization clock-time.

An information processing device for transmitting information via a network, according to the third aspect of the present invention is provided with: a stored volume data acquiring unit for acquiring data on a stored volume of the information for the purpose of utilizing the information; a communication time acquiring unit for acquiring a communication time necessary for transferring the information; a stored volume recognizer for computing a time necessary for retransmitting the information on the basis of the communication time and recognizing a reduction of the stored volume of the information during the retransmission time on the basis of the stored volume data; and an information processor adapted to transmit the information with an error correction code added thereto when the stored volume recognizer determines that the reduction of the stored volume of the information is short of a predetermined level, but transmit the information with an error detection code added thereto when the stored volume recognizer determines that the reduction of the stored volume of the information exceeds the predetermined level.

An information processing device for receiving information via a network, according to the fourth aspect of the present invention is provided with: an information requesting unit for transmitting a request signal requesting transmission of the information; a reference clock-time generator for timing a clock-time and transmitting the timed clock-time as reference clock-time to the origin of transmission of the information; an information acquiring unit for acquiring the information with an error correction code added thereto and the information with an error detection code added thereto and, if the acquired information contains any error, transmitting a retransmission request signal requesting correction of the information on the basis of the error correction code or retransmission of the information on the basis of the error detection code so as to acquire error-free information; and an information processor for processing the error-free information that is acquired by the information acquiring unit on the basis of the timed clock-time so as to make it utilizable and transmitting a clock-time for utilizing the information to the destination as reference to be used by the origin of transmission to determine if the origin of transmission adds an error correction code or an error detection code to the information before transmitting the information.

An information processing device for receiving information via a network, according to the fifth aspect of the present invention is provided with: an information requesting unit for transmitting a request signal requesting transmission of the information; a reference clock-time generator for timing a clock-time and transmitting the timed clock-time as reference clock-time to the origin of transmission of the information; an information acquiring unit for acquiring the information with an error correction code added thereto and the information with an error detection code added thereto and, if the acquired information contains any error, transmitting a retransmission request signal requesting correction of the information on the basis of the error correction code or retransmission of the information on the basis of the error detection code so as to acquire error-free information; an information processor for processing the error-free information on the basis of the timed clock-time so as to make it utilizable; and an information buffer for temporarily storing the error-free information for the purpose of processing by the information processor and transmitting the stored volume of the error-free information as reference to be used by the origin of transmission to determine if the origin of transmission adds the error correction code or the error detection code to the information before transmitting the information.

An information processing system, according to the sixth aspect of the present invention is provided with: an information processing device according to the first or the second aspect of the present invention; and a client unit connected to the information processing device via the network so as to be able to transmit information to and receive information from the information processing device and adapted to process the information transmitted from the information processing device so as to make it utilizable.

An information processing system, according to the seventh aspect of the present invention is provided with: an information processing device according to the fourth aspect of the present invention; and a server unit connected to the information processing device via the network so as to be able to transmit information to and receive information from the information processing device and adapted to compare the clock-time transmitted from the information processing device and the retransmission time for retransmitting the information on the basis of the transfer time for transferring the information to the information processing device so as to be received by the information processing device and add an error correction code to the information if it determines that it cannot meet the utilization clock-time with the retransmission time, but add an error detection code to the information if it determines that it can meet the utilization clock-time, before it transmits the information to the client unit.

An information processing system, according to the eight aspect of the present invention is provide with: an information processing device according to the fifth aspect of the present invention; and a server unit connected to the information processing device via the network so as to be able to transmit information to and receive information from the information processing device and adapted to recognize the retransmission time for retransmitting the information at the reference clock-time transmitted from the information processing device on the basis of the transfer time for transferring the information to the information processing device so as to be received by the information processing device and, at the same time, the reduction of the stored volume of the information from the reference clock-time on the basis of the stored volume data transmitted from the information processing device and add an error correction code to the information when it is determined that the reduction of the stored volume of the information is short of a predetermined level before transmitting the information to the information processing device, but add an error detection code to the information when it is determined that the reduction of the stored volume of the information exceeds the predetermined level before transmitting the information to the information processing device.

An information processing system including a server unit for transmitting information with an error correction code or an error detection code added thereto via a network and a client unit for receiving the information to utilize it, according to the nineth aspect of the present invention, is characterized in that the server unit has a clock-time acquiring unit for acquiring a clock-time of utilization of the information at the client unit, a transfer time acquiring unit for acquiring a transfer time necessary for transmitting the information to the client unit for reception, a clock-time comparator for computing a retransmission time necessary for retransmitting the information for reception on the basis of the transfer time and comparing the retransmission time and the clock-time of utilization, and an information processor adapted to transmit the information with an error correction code added thereto upon determining that the retransmission time outgoes the clock-time of utilization as a result of comparison of the clock-time comparator, but transmit the information with an error detection code added thereto upon determining that the retransmission time falls short of the clock-time of utilization as a result of comparison, and also characterized in that the client unit has an information requesting unit for transmitting a request signal requesting transmission of the information to the server unit, a reference clock-time generator for timing a reference clock-time to be used as reference for the clock-time of utilization and transmitting it to the server unit, an information acquiring unit for acquiring the information with the error correction code added thereto and the information with the error detection code added thereto and, if the acquired information contains any error, transmitting a retransmission request signal requesting correction of the information on the basis of the error correction code or retransmission of the information on the basis of the error detection code to acquire error-free information and an information processor for utilizing the error-free information acquired by the information acquiring unit on the basis of the timed reference clock-time.

An information processing system including a server unit for transmitting information with an error correction code or an error detection code added thereto via a network and a client unit for receiving the information to utilize it, according to the tenths aspect of the present invention, is characterized in that the server unit has a stored volume data acquiring unit for acquiring a stored volume of the information necessary for utilizing the information from a client unit, a transfer time acquiring unit for acquiring a transfer time necessary for transmitting the information, a stored volume recognizer for computing a retransmission time necessary for retransmitting the information for reception on the basis of the transfer time and recognizing a reduction of the stored volume of the information during the retransmission time on the basis of a stored volume data and an information processor adapted to transmit the information with an error correction code added thereto when the reduction of the stored volume of the information is short of a predetermined level, but transmit the information with an error detection code added thereto when the reduction of the stored volume of the information exceeds the predetermined level, and also characterized in that the the client unit has an information requesting unit for transmitting a request signal requesting transmission of the information to the server unit, a reference clock-time generator for timing a clock-time and transmitting the timed clock-time as reference clock-time to the server unit, an information acquiring unit for acquiring the information carrying the error correction code added thereto and the information carrying the error detection code added thereto and, if the acquired information contains any error, transmitting a retransmission request signal requesting correction of the information on the basis of the error correction code or retransmission of the information on the basis of the error detection code to acquire error-free information and an information processor for processing the error-free information so as to make it utilizable on the basis of the timed clock-time and an information buffer for temporarily storing the error-free information so as to be processed by the information processor and transmitting the stored volume of error-free information as reference for the origin of transmission to select either an error correction code or an error detection code to be added to the information for transmission.

An information processing method for transmitting information by means of a computer and via a network, according to the eleventh aspect of the present invention, includes the steps of: acquiring a processing time necessary for processing the information and a transfer time necessary for transferring the information; computing a time necessary for retransmitting the information on the basis of the transfer time; and transmitting the information with an error correction code added thereto when it is determined that the retransmission time outgoes the time necessary for processing the information, but transmitting the information with an error detection code added thereto when it is determined that the retransmission time falls short of the time necessary for processing the information.

An information processing method for transmitting information by means of a computer and via a network, according to the twelfth aspect pf the present invention, includes the steps of: acquiring a clock-time for utilizing the information and a transfer time necessary for transferring the information; computing a time necessary for retransmitting the information on the basis of the transfer time; and comparing a retransmission time and the clock-time for utilizing the information so as to transmit the information with an error correction code added thereto when it is determined that the retransmission time outgoes the clock-time for utilizing the information as a result of the comparison, but transmit the information with an error detection code added thereto when it is determined that the retransmission time falls short of the clock-time.

An information processing method for transmitting information by means of a computer and via a network, according to the thirteenth aspect of the present invention, includes the steps of: acquiring data on a stored volume of information for the purpose of utilizing the information and the transfer time necessary for transferring the information; computing a time necessary for retransmitting the information on the basis of the transfer time and recognizing the reduction in the accumulated volume of information in the retransmission time on the basis of the accumulation data; and transmitting the information with an error correction code added thereto when the reduction of the stored volume of the information is short of a predetermined level, but transmitting the information with an error detection code added thereto when the reduction of the stored volume of the information exceeds the predetermined level.

An information processing method for having a client unit to receive information carrying either an error correction code or an error detection code added thereto from a server unit via a network for utilization, according to the fourteenth aspect of the present invention, includes the steps of: having the server unit acquire a clock-time for utilizing the information by a processor of the client unit and a transfer time necessary for transmitting the information so as to be received by the client unit on the basis of a reference clock-time as timed by the client unit upon recognizing a request signal from the client unit requesting transmission of the information, and having the server unit compute a retransmission time necessary for retransmitting the information so as to be received by the client unit on the basis of the transfer time, compare the retransmission time and the clock-time of utilization and add an error correction code to the information when it is determined that the retransmission time outgoes the clock-time for utilizing the information as a result of the comparison and transmit the information to the client unit, but add an error detection code to the information when it is determined that the retransmission time falls short of the clock-time and transmit the information to the client unit.

An information processing method for having a client unit to receive information with either an error correction code or an error detection code added thereto from a server unit via a network for utilization, according to the fifteenth aspect of the present invention, includes the steps of: having the server unit acquire data on a stored volume of information for the purpose of utilization of the information by a processor of the client unit and a transfer time necessary for transferring the information so as to be received by the client unit upon recognizing a request signal from the client unit requesting transmission of the information; and having the server unit recognize a retransmission time necessary for retransmitting the information so as to be received by the client unit on the basis of the transfer time and the reduction of the stored volume of the information on the basis of the stored volume data, add an error correction code to the information when the reduction in the accumulated volume of the information is short of a predetermined level during the retransmission time and transmit the information to the client unit, but add an error detection code to the information when the reduction in the accumulated volume of the information exceeds the predetermined level and transmit the information to the client unit.

An information processing program according to the sixteenth aspect of the present invention is characterized by having a computer to execute an information processing method according to the twelfth of the fifteenth aspect of the present invention.

A recording medium recording an information processing program according to the seventeenth aspect of the present invention, is characterized by recording the above described information processing program so as to be executable to a computer.

In the Drawings;

FIG. 1 is a schematic block diagram of a data transmission/reception system according to a first embodiment in a data processing system of the present invention;

FIG. 2 is a schematic illustration of the data structure of a video packet to be transmitted that corresponds to the retransmission technique (ARQ) of the first embodiment;

FIG. 3 is a schematic illustration of the data structure of a video packet to be transmitted that corresponds to the error correction processing (FEC) of the first embodiment;

FIG. 4 is a schematic illustration for explaining a transmission format of the first embodiment;

FIG. 5 is a schematic illustration for explaining another transmission format of the first embodiment;

FIG. 6 is a flowchart showing the operation of a client unit of the data transmission/reception system of the first embodiment;

FIG. 7 is a flowchart showing the operation of a server unit of the data transmission/reception system of the first embodiment;

FIG. 8 is a sequence diagram showing the operation of data transmission/reception system of the first embodiment; and

FIG. 9 is a sequence diagram illustrating a state of transmission/reception of information of a data transmission/ reception system according to a second embodiment in the data processing system of the present invention.

Embodiments of the present invention will be described below. Firstly, the first embodiment of the present invention, which is a data transmission/reception system, will be described. While this embodiment is described below in terms of video data as information to be transmitted and received, it can deal with any information such as audio data including music, image data, programs, pieces of software and control signals.

[1st Embodiment]

(Configuration of the Data Transmission/Reception System)

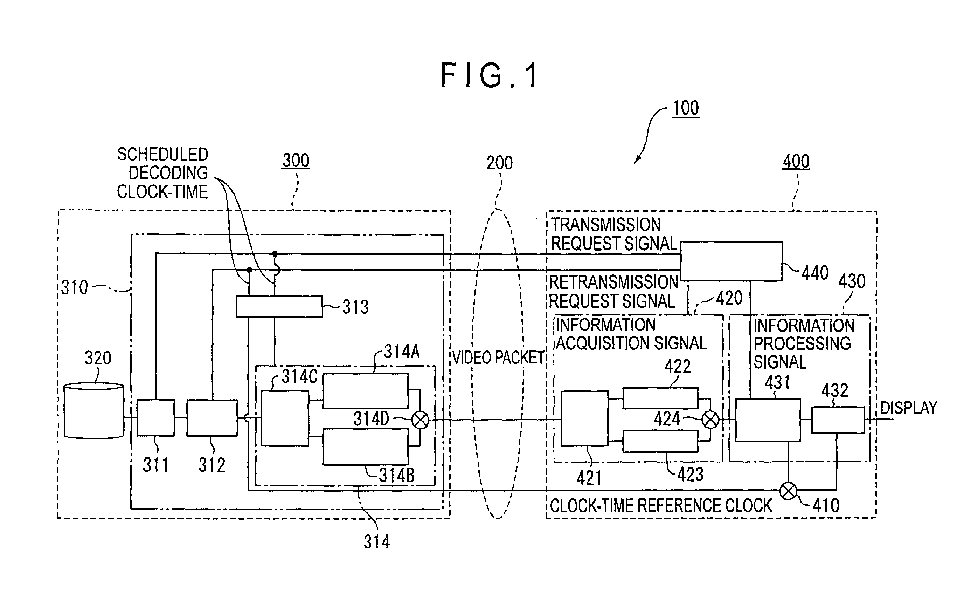

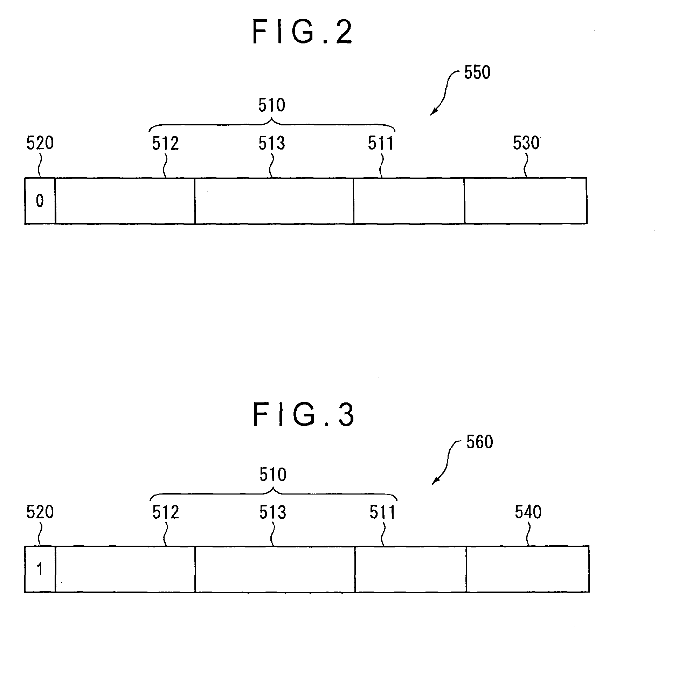

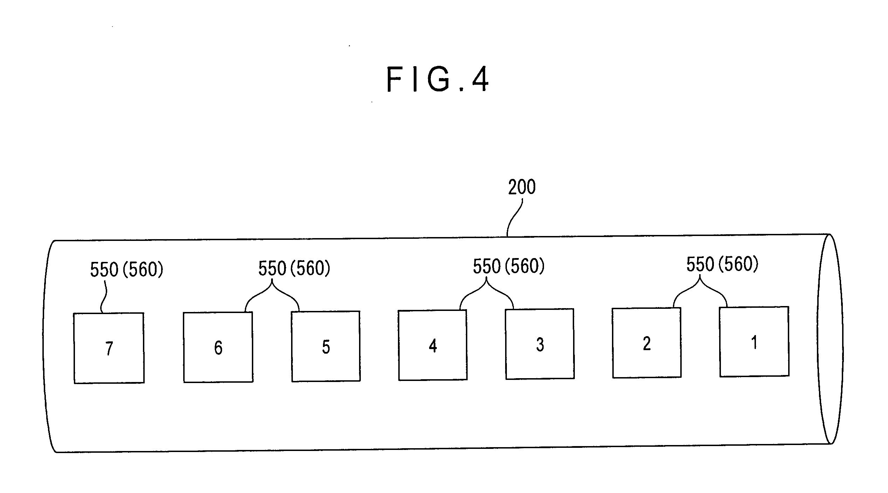

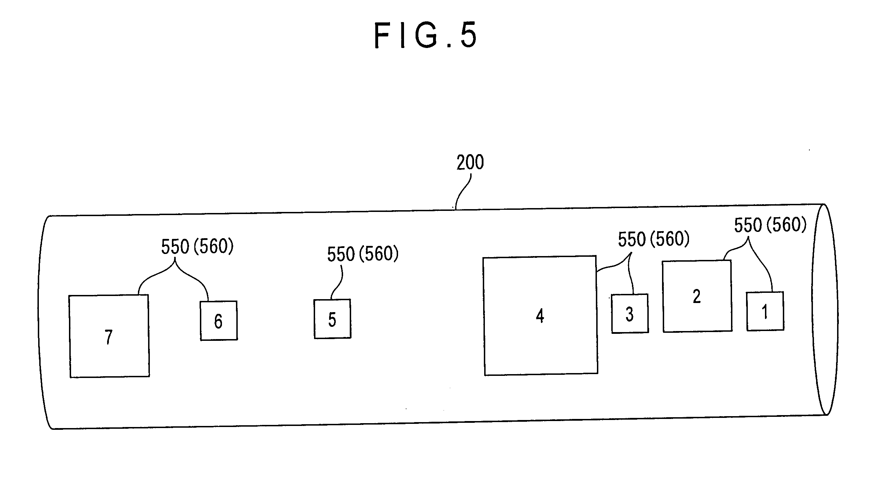

FIG. 1 is a schematic block diagram of a data transmission/reception system according to the present embodiment. FIG. 2 is a schematic illustration of the data structure of a video packet to be transmitted that corresponds to the retransmission technique (ARQ). FIG. 3 is a schematic illustration of the data structure of a video packet to be transmitted that corresponds to the error correction processing (FEC). FIG. 4 is a schematic illustration for explaining a transmission format. FIG. 5 is a schematic illustration for explaining another transmission format.

Referring to FIG. 1, reference numeral 100 denotes a data processing system, which is a data transmission/reception system. The data transmission/reception system 100 has a network 200, a server unit 300 that also operates as information processing device and a client unit 400 that also operates as information processing device.

The server unit 300 and the client unit 400 are connected to the network 200 so that the server unit 300 and the client unit 400 are able to transmit data to and receive data from each other. The network is a so-called best-effort type Internet that does not guarantee that the data transmitted from the server unit 300 get to the client unit 400 without fail and that the delay time is reliably found within a predetermined time period. The network 200 may be an intranet based on a general purpose protocol such as TCP/IP (Transmission Control Protocol/Internet Protocol), an extranet, a LAN (Local Area Network) such as Ethernet™, a communication network or broadcasting network formed by a plurality of base stations that can transmit and receive information via a wireless medium or a wireless medium per se that operates as medium by way of which the server unit 300 and the client unit 400 can directly transmit and receive information. For the purpose of the present invention, a wireless medium may be an electric wave, light, a sound wave, an electromagnetic wave or some other medium.

The server unit 300 is, for instance, adapted to transmit, for example, video data to the client unit 400 over the network 200. It can transmit information to and receive information from the client unit 400. Note that while this embodiment is described in terms of video data as information to be transmitted and received, it can deal with any information such as audio data, image data, programs, pieces of software and control signals. The server unit 300 typically includes a transmitter-side processing section 310 and a video recording device 320 that is a memory.

The video recording device 320 is, for example, a database storing various video data and has a table structure for recording each video data. The video recording device 320 is connected to the transmitter-side processing section 310 so as to exchange information with it. It is adapted to output certain video data to the transmitter-side processing section 310 according to the request from the section 310.

The transmitter-side processing section 310 reads out given video data recorded in the video recording device 320, processes them appropriately and transmits the processed data to the client unit 400. The transmitter-side processing section 310 has a reader 311, a retransmission buffer 312, a clock-time comparator 313, which also operates as clock-time information acquiring unit and communication time acquiring unit, and a processing unit 314.

The reader 311 is connected to the video recording device 320 and reads out given video data, or the video data requested by the client unit 400, from the video recording device 320. Then, the reader 311 generates video packets 510 having a data structure as shown in FIGS. 2 and 3 in order to transmit the video data it has read out typically on a time division basis. The retransmission buffer 312 is connected to the reader 311. The reader 311 outputs the video packets 510 it has generated to the retransmission buffer 312.

Each video packet 510 includes a header and a payload. The payload typically contains video data 511 obtained by dividing a series of video data, which are stream data, as shown in FIGS. 2 and 3. The header typically contains version information, the header length, the packet length, the fragment offset that indicates the position in the original video data, which is divided to produce the video data 511, a sequence number 512 as shown in FIGS. 2 and 3 that indicates the turn of the packet, a scheduled decoding clock-time information (DTS) 513, which is the clock-time to be utilized by the terminal unit 400 typically for decoding processing, or so-called DTS (Decoding Time-Stamp) as defined in ISO/IEC 11172-1 (MPEG1 Systems) or in ISO IEC 13818-1 (MPEG2 Systems), and a reception notification number that indicates the sequence number of the packet to be transmitted next.

The retransmission buffer 312 acquires the video packet 510 output from the reader 311 and temporarily stores it. The processing unit 314 is connected to the retransmission buffer 312. Then, the retransmission buffer 312 outputs the video packet 510 stored therein to the processing unit 314. The retransmission buffer 312 also temporarily stores the same information as the video packet 510 output therefrom. More specifically, it stores the video packet 510 to be transmitted from the reader 311 next until it is acquired and deletes it when it acquires the next video packet 510 from the reader 311.

The clock-time comparator 313 is connected to the client unit 400 via the network 200 and acquires from the client unit 400 the reference clock-time for the clock-time as timed by the client unit 400. The clock-time comparator 313 also acquires the DTS 513 that is to be used for transmission from the client unit 400 to the network 200. Furthermore, the clock-time comparator 313 acquires communication time information on the time when the video packet 510 is transmitted or transferred to the client unit 400 and it receives a signal telling that the client unit 400 received the video packet 510, or RTT (Round Trip Time R) of communication (RFC (Request For Comments) 1392, which is a document officially issued from IETF (Internet Engineering Task Force)). Additionally, the clock-time comparator 313 is connected to the processing unit 314 and appropriately outputs a predetermined signal to the processing unit 314 so as to operate the processing unit 314.

The clock-time comparator 313 computes the retransmission time for retransmitting the video packet 510 to the client unit 400 on the basis of the RTT. More specifically, as one and a half round trips are made for the retransmission of the video packet 510, the retransmission time is computed as the sum of the time obtained by multiplying the RTT by 1.5, the processing time for transmitting the video packet 510, the time necessary for the client unit 400 to receive the packet 510, the processing time for the retransmission and the data transfer time for transferring the video packet 510 that reflects the data volume of the video packet 510 and the transmission speed.

Furthermore, the clock-time comparator 313 compares the scheduled decoding clock-time information that is based on the reference clock-time, or the current clock-time acquired from the client unit 400, and the clock-time when the retransmission time has elapsed from the current clock-time. More specifically, if the current clock-time is T, the scheduled decoding clock-time is D and the retransmission time is $(3/2)R$, it determines if $(T + (3/2)R) > D$ or not. If the clock-time comparator 313 determines that $(T + (3/2)R) > D$, it outputs a predetermined signal to the processing unit 314.

The processing unit 314 is connected to the retransmission buffer 312 and the clock-time comparator 313 and also to the client unit 400 via the network 200. The processing unit 314 acquires the video packet 510 outputs from the retransmission buffer 312 and the predetermined signal output from the clock-time comparator 313 in order to carry out a processing necessary for transmitting the video packet 510 to the client unit 400 via the network. More specifically, the processing unit 314 has an error detection code adding unit 314A, an error correction code adding unit 314B, a transmitter-side selector 314C as selecting unit and a synthetic transmitter 314D.

The error detection code adding unit 314A generates video packet information 550 for transmission by adding a flag 520, which is "0", to the leading end position of the video packet 510 to indicate that an error detection code is added and also adding an error detection code 530 to the tail end position of the video packet 510 as shown in FIG. 2. The error correction code adding unit 314B generates video packet information 560 to be transmitted by adding a flag 520, which is "1", to the leading end position of the video packet 510 to indicate that an error correction code is added and also adding an error correction code 540 to the tail end position of the video packet 510 as shown in FIG. 3.

The transmitter-side selector 314C selects the error detection code adding unit 314A or the error correction code adding unit 314B as a result of recognizing the predetermined signal from the clock-time comparator 313. More specifically, if the transmitter-side selector 314C acquires a signal output from the clock-time comparator 313 as a result of determining that $(T + (3/2)R) > D$, it outputs the video packet 510 output from the retransmission buffer 312 to the error correction code adding unit 314B so as to have the error correction code adding unit 314B generate a video packet information 560 to be transmitted by adding the flag 520 of "1" and the error correction code 540 to the video packet 510. If, on the other hand, the transmitter-side selector 314C acquires a signal output from the clock-time comparator 313 as a result of determining that $(T + (3/2)R) > D$ is not true, or $(T + (3/2)R) \leqq D$, it outputs the video packet 510 to the error detection code adding unit 314A so as to have the error detection code adding unit 314A generate a video packet information 550 to be transmitted by adding the flag 520 of "0" and the error detection code 530.

The synthetic transmitter 314D acquires the video packet information 550 or 560 output from the error detection code adding unit 314A or the error correction code adding unit 314B, whichever appropriate, that is produced by adding the flag 520 and the error detection code 530 or the error correction code 540, whichever appropriate, to the video packet 510 and transmits it to the client unit 400 via the network 200. As for the timing of transmission, it may transmit video packets 550 (560), each having a predetermined volume, at predetermined regular time intervals as shown in FIG. 4 or video packets having different volumes at different time intervals as shown in FIG. 5. FIGS. 4 and 5 are conceptual illustrations of packets that are transmitted on a time division basis, in which each square indicates a video packet information 550 (560) to be transmitted and the size of the square represents the volume of the packet.

The client unit 400 is connected to the server unit 300 via the network 200 and also to a display (not shown) that is an output unit to be used for utilizing information. The client unit 400 may be a mobile phone, a PHS (Personal Handyphone System), a personal computer or a PDA (Personal Digital Assistant) that is adapted to receive the video packet information 550 (560) transmitted from the server unit 300 via the network 200, process them in such a way that it can utilize them and hence output them and actually output them to the display, which is an output unit, so as to have the output unit display the information. The client unit 400 has an input unit (not shown), a timer 410 that operates as reference clock-time generator, an information acquiring unit 420, an information processor 430 and an information requesting unit 440.

The input unit typically includes a keyboard and/or a mouse and has an input operation section that by turn includes operation buttons and/or operation knobs (not shown) to be used for input operations. The input operation section is typically used to specify the operation of the client unit 400. For example, it may be so arranged as to output a signal for connecting the client unit 400 to the server unit 300 via the network 200 or for selecting the video data that the client unit 400 requests the server unit 300 to transmit in response to an input operation at the input unit. The components of the input unit are not necessarily limited to operation buttons and/or operation knobs and may include a touch panel arranged for input operations on the display that is connected to the client unit 400. A voice recognizer that recognizes commands in the form of human voice for input operations and/or an input port that recognizes signals representing input operations at a remote input operation section connected to the client unit through wires or wirelessly.

The timer 410 acquires the current clock-time according to the pulse signal from a reference pulse generator that generates a reference pulse. The current clock-time acquired by the timer 410 is used as reference clock-time for the timing of processing at the data transmission/reception system 100. Any clock mechanism may be used for the timer to acquire a clock-time.

The information acquiring unit 420 is connected to the server unit 300 via the network 200 as well as to the information processor 430 and the information requesting unit 440. The information acquiring unit 420 acquires the video packet information 550, 560 transmitted from the server unit 300 and determines if the video packets 510 are acquired without any error before it outputs the appropriately acquired video packets 510 to the information processor 430. If the acquired video packets 510 contain an error, it outputs a predetermined signal to the information requesting unit 440. More specifically, the information acquiring unit 420 has a receiver-side selector 421, an error detector 422, an error corrector 423 and a data acquiring unit 424.

The receiver-side selector 421 is connected to the server unit 300 via the network 200 as well as to the error detector 422 and the error corrector 423. The receiver-side selector 421 acquires the video packet information 550, 560 transmitted from the server unit 300 via the network 200 and determines if they are to be treated for retransmission processing (ARQ: automatic repeat request) due to detection of an error or for error correction processing (FEC: forward error correction). More specifically, the receiver-side selector 421 recognizes the flag 520 of each of the video packet information 550, 560 and selects either the error detector 422 or the error corrector 423 to make it operate according to the flag 520. If the receiver-side selector 421 recognizes that the flag 520 is "0", it determines that video packet information 550 is acquired and outputs the video packet information 550 to the error detector 422 for appropriate processing. If, on the other hand, receiver-side selector 421 recognizes that the flag 520 is "1", it determines that video packet information 560 is acquired and outputs the video packet information 560 to the error corrector 423 for appropriate processing.

The error detector 422 acquires the transmitted video packet information 550 that are output from the receiver-side selector 421 and recognizes the data status of each of the video packets 510. More specifically, it determines if the data of each of the video packets 510 are appropriate data that are free from a reception error and hence there is no lost data. If the error detector 422 determines that the data of each of the video packets 510 are appropriate data and no data is lost, it takes out the video packets 510. More specifically, it removes the flag 520 and the error detection code 530 from each of the transmitted video packet information 550 and outputs the video packets 510 to the data acquiring unit 424 connected to the error detector 422. If, on the other hand, the error detector 422 determines that the data of any of the video packets 510 are inappropriate data, it outputs a signal for requesting retransmission of the video packets 510 whose error is recognized to the information requesting unit 440 connected to the error detector 422 and deletes the transmitted video packet information 550 that it has acquired. The DTS 513 for decoding the video packets 510 is added to the signal output to the information requesting unit 440.

The error corrector 423 acquires the transmitted video packet information 550 that are output from the receiver-side selector 421 and, like the error detector 422, recognizes the data status of each of the video packets 510. More specifically, it determines if the data of each of the video packets 510 are appropriate data that are free from a reception error and hence there is no lost data. If the error corrector 423 determines that the data of each of the video packets 510 are appropriate data and no data is lost, it takes out the video packets 510. More specifically, it removes the flag 520 and the error correction code 540 from each of the transmitted video packet information 560 and outputs the video packets 510 to the data acquiring unit 424 connected to the error corrector 423. If, on the other hand, the error corrector 423 determines that the data of any of the video packets 510 are inappropriate data, it repairs the video packet 510 according to the error correction code 540 and acquires the video packet 510 that now contains appropriate data before it outputs the video packets 510 to the data acquiring unit 424. If the error corrector 423 cannot repair the video packet 510, it outputs a signal telling that the video packet 510 cannot be repaired to the information requesting unit 440 or to the information processor 430 via the data acquiring unit 424.

The data acquiring unit 424 is connected to the error detector 422 and the error corrector 423 as well as to the information processor 430. The data acquiring unit 424 acquires the video packets 510 output from either the error detector 422 or the error corrector 423 and outputs it to the information processor 430.

The information processor 430 is connected to the information acquiring unit 420 as well as to the timer 410 and the information requesting unit 440. The information processor 430 acquires the video packets 510 output from the data acquiring unit 424 of the information acquiring unit 420 and processes them to make them utilizable. More specifically, the information processor 430 has a decoder buffer 431 that operates as information buffer and a decoder 432 that operates as information processor.

The decoder buffer 431 is connected to the information acquiring unit 420, the timer 410 and the information requesting unit 440. It acquires video packets 510 from the data acquiring unit 424 of the information acquiring unit 420 and also the current clock-time from timer 410 as reference clock-time. The decoder buffer 431 temporarily stores the acquired video packets 510 and recognizes the DTS 513 of the video packets 510. When the scheduled decoding clock-time comes according to the DTS 513 and the current clock-time, the decoder buffer 431 sequentially outputs the video packets 510 to the decoder 432 that is connected to the decoder buffer 431 on the basis of the DTS 513 of each of the video packets 510 and the current clock-time.

Additionally, the decoder buffer 431 monitors the stored volume of the video packets 510 stored therein and determines if the stored volume is smaller than a predetermined volume or not. If the decoder buffer 431 recognizes that the stored volume is smaller than the predetermined volume, it outputs a signal for requesting transmission of the next video packet 510 to the information requesting unit 440. The DTS 513 of the most recently stored video packet 510 is typically added to the signal output to the information requesting unit 440.

The decoder 432 is connected to the decoder buffer 431 and also to the timer 410 so that it acquires the video packet 510 outputs from the decoder buffer 431 and also the current clock-time. Then, the decoder 432 decodes, or demodulates, the video data 511 of the video packet 510 according to the current clock-time it acquires and the DTS 513 of the video packet 510 and couples the decoded video data 511 according to the sequence numbers 512. Then, the decoder 432 sequentially outputs the decoded video data 511 to the output unit, which is typically a display, and has the output unit display the video data typically as images. Note that the decoder 432 does not couple the video data that contains one or more errors and could not be repaired according to the signal output from the error corrector 423 of the information acquiring unit 420, telling that the video data could not be repaired, to which the corresponding DTS 513 is added. Instead, the decoder 432 may couple the next video data, suspend the transmitting/receiving operation of the server unit 300 or prohibit any output to the display so that no image may be displayed there.

The information requesting unit 440 is connected to the information acquiring unit 420 and the information processor 430. It is also connected to the server unit 300 via the network 200 so that it can transmit various pieces of information to the server unit 300 as so many signals. The information requesting unit 440 acquires a signal for having the server unit 300 transmit predetermined video data from an input unit (not shown) and transmits a data request signal for requesting transmission of predetermined video data to the server unit 300. The information requesting unit 440 also acquires a signal requesting retransmission of a video packet 510 from the error detector 422 of the information acquiring unit 420 to which a DTS 513 is added and transmits a retransmission request signal for requesting the server unit 300 to retransmit the video packet 510 to the server unit 300. The retransmission request signal is generated so as to provide a data structure that contains the DTS 513 of the video packet 510 before it is transmitted. The information requesting unit 440 acquires a signal that corresponds to the message from the error corrector 423 of the information acquiring unit 420 telling that it cannot repair the video packet 510 to which the DTS 513 is added and transmits a request signal for requesting transmission of the next video packet 510 to the server unit 300. The request signal is generated so as to provide a data structure that contains the DTS 513 of the video packet 510 before it is transmitted.

(Operation of the Data Transmission/Reception System)

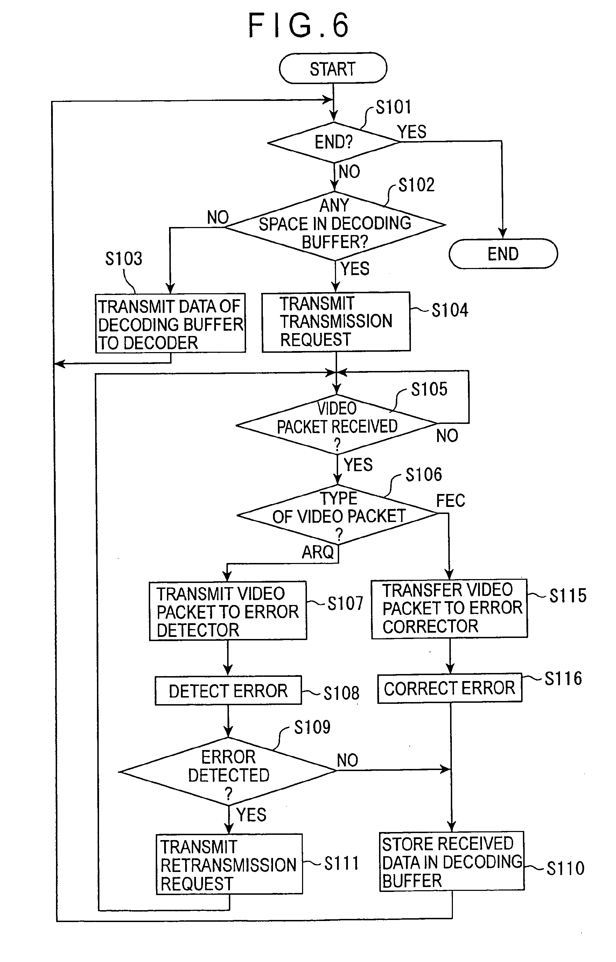

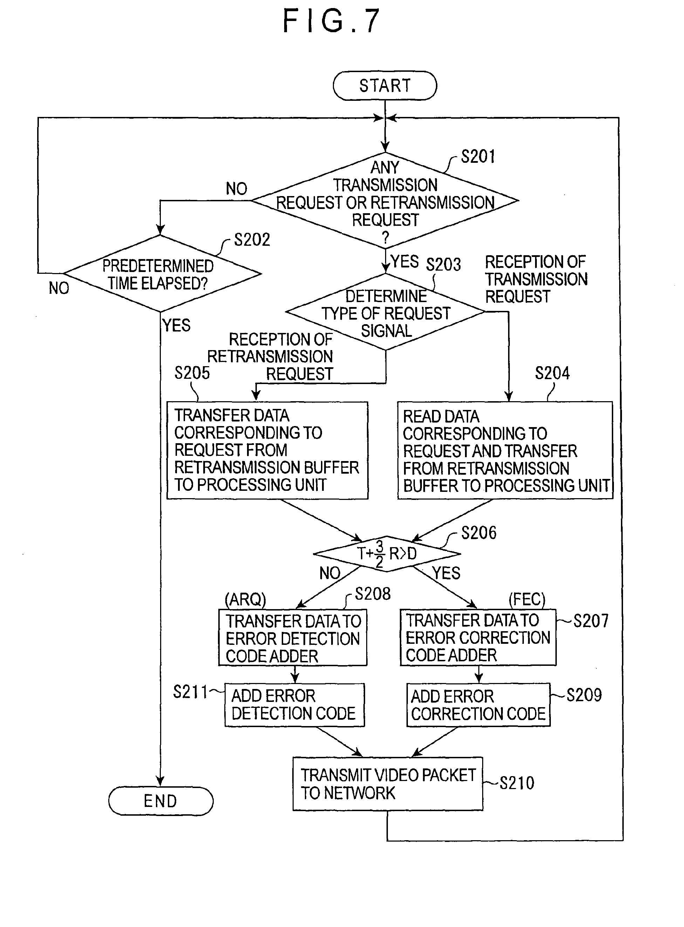

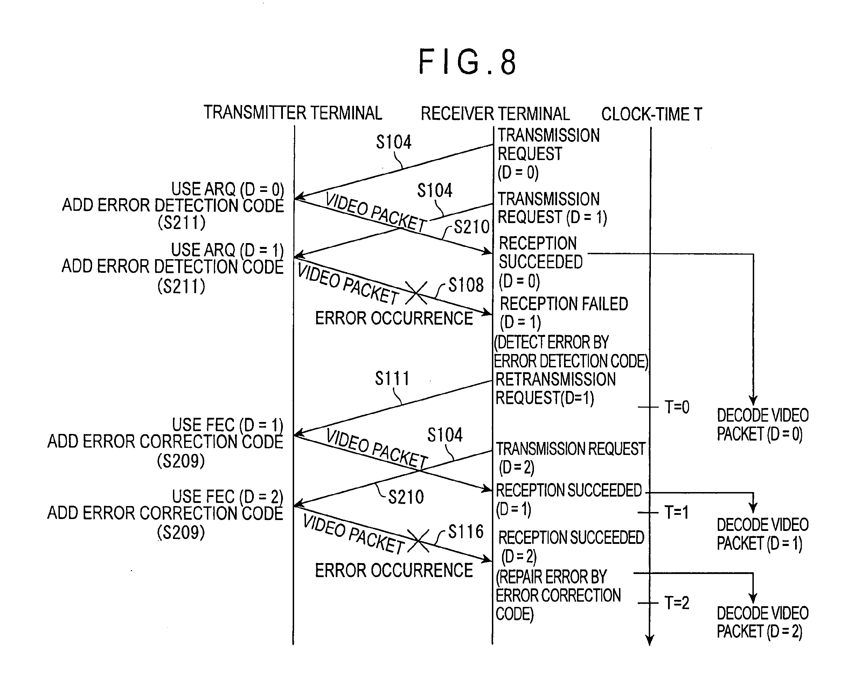

Now, the operation of the above described data transmission/reception system 100 will be described by referring to FIGS. 6 through 8. FIG. 6 is a flowchart showing the operation of the client unit 400 of the data transmission/reception system 100. FIG. 7 is a flow chart of the operation of the server unit 300 of the data transmission/reception system 100. FIG. 8 is a sequence diagram of the operation of data transmission/reception system 100. In FIG. 8, the timings T = 0, 1, 2, ... for decoding the data of a video packet shown on the column of clock-time T respectively indicates scheduled decoding clock-times as timed on the basis of the reference clock-time. If the video data to be decoded are acquired by each of the timings, images will be appropriately displayed on the display.

(Operation Mainly Performed By Client Unit 400)

As a user turns on the power source of the client unit 400, the client unit 400 determines if the operation of acquiring video data from the server unit 300 is suspended or not, if the operation of displaying images on the display is suspended or not and if a signal indicating that the video data processing of the information processor 430 needs to be ended is detected or not (Step S101). Then, when the client unit 400 recognizes a signal indicating that the video data processing needs to be ended, it ends the operation of processing the video data. If, on the other hand, the client unit 400 does not recognize a signal indicating that the video data processing needs to be ended in the Step S101, it then determines if the stored data volume as recognized by the decoder buffer 431 is smaller than a predetermined volume or not and hence if the decoder buffer has a space whose volume is greater than the predetermined volume or not (Step S102).

If it is determined in the Step S102 that the decoder buffer 431 does not have a sufficient space, it means that the decoder buffer 431 has already acquired and stored video packets 510 and therefore the client unit 400 outputs the stored video packets 510 to the decoder 432 when the current clock-time comes to agree with the decode schedule time on the basis of the schedules decoding clock-time information 513 and the current clock-time (Step S103) and then returns to the Step S101. If, on the other hand, it is determined in the Step S102 that the decoder buffer 431 has a sufficient space, the client unit 400 goes into a standby status, where it waits for an operation of processing video data.

In the standby status, where the client unit 400 waits for an operation of processing video data, the user may operate the input unit (not shown) of the client unit 400 to connect the client unit 400 to the server unit 300 via the network 200 and input a message, requesting the server unit 300 to transmit given video data. Then, in response to the input operation, the information requesting unit 440 generates a data request signal for requesting transmission of predetermined video data and transmits it to the server unit 300 (Step S104).

After the Step S 104, the information acquiring unit 420 goes into a standby status, where it waits for reception of video packet information 550, 560 to be transmitted from the server unit 300 (Step S105). If the client unit 400 recognizes in the Step S105 that the receiver-side selector 421 of the information acquiring unit 420 has acquired video packet information 550, 560 transmitted from the server unit 300, the selector 421 selects either error detection processing (ARQ) or error correction processing (FEC). More specifically, the selector 421 recognizes the flag 520 that indicates either the video packet information 550 or 560 transmitted from the server unit 300. In other words, it recognizes if the flag 520 is "0" or "1" and determines the type of the transmitted video packet information 550 or 560 (Step S106).

If the receiver-side selector 421 recognizes in the Step S106 that the flag 520 is equal to "0" and hence the transmitted video packet is a video packet information 550 that is to be subjected to ARQ, it outputs the transmitted video packet information 550 to the error detector 422 (Step S107). Then, the error detector 422 recognizes the data status of the video packet 510 of the transmitted video packet information 550 it acquires. In other words, it performs an error detecting operation (Step S108). Then, the error detector 422 determines if an error is detected or not as a result of the error detecting operation in the Step S108 (Step S109).

If the error detector 422 determines that it does not detect any error and hence the video packet 510 contains appropriate data that are free from defects in the Step S109, it takes out the video packet 510. In other words, it deletes the flag 520 and the error detection code 530 from the transmitted video packet information 550 and outputs the information 550 to the decoder buffer 431 of the information processor 430 via the data acquiring unit 424 (Step S110).

After acquiring the video packet 510 in the Step S110, the decoder buffer 431 outputs the video packet 510 to the decoder 432 according to the DTS 513 and the current clock-time. Then, the decoder buffer 431 returns to the Step S101 and operates to request transmission of the next video packet 510. Thereafter, the decoder 432 processes the acquired video packet 510 appropriately. More specifically, it performs a decoding operation including demodulating the video data 511 according to the current clock-time and the DTS 513 of the video packet 510 it has acquired and coupling the video data 511 according to the sequence number 512. Then, it sequentially outputs the decoded video data 511 to the output unit, which is typically a display, so as to display images there.

If, on the other hand, in the Step S109, the error detector 422 determines that it detects any error and the video packet 510 is not received properly and hence contains inappropriate data, it requests the server unit 300 to retransmit the video packet 510 on the basis of the error detection code 530 (Step S111). More specifically, the error detector 422 outputs a signal for requesting the server unit 300 to retransmit the video packet 510 to replace the current video packet 510 that is found to be defective, adding the DTS 513 to the signal, to the information requesting unit 440. Then, the information requesting unit 440 transmits a retransmission request signal for requesting retransmission of the video packet 510 to the server unit 300 and returns to the Step S105.

If the receiver-side selector 421 determines in the Step S 106 that the flag 520 is "1" and hence the transmitted video packet is video packet information 560 that is to be subjected to FEC, it outputs the transmitted video packet information 560 to the error corrector 423 (Step S115). Then, the error corrector 423 recognizes the data status of the transmitted video packet information 560 it acquired from the receiver-side selector 421 and corrects the error to repair the video packet 510 by the error correction code 540 (Step S116). Subsequently, it outputs the video packet 510 that has been repaired by error correction processing to the decoder buffer 431 of the information processor 430 via the data acquiring unit 424 in the Step S110.

(Operation Mainly Performed By Server Unit)

The server unit 300 is in a standby status for acquiring either a data request signal issued from the client unit 400 via the network 200, requesting transmission of predetermined video data, a request signal, requesting transmission of a next video packet 510 or a retransmission request signal, requesting retransmission of the video packet 510. More specifically, the server unit 300 determines if there is a transmission request or retransmission request from the client unit 400 (Step S201) and, if there is not any request signal for a predetermined time period (Step S202), it processes predetermined video data and ends the processing. If, on the other hand, the server unit 300, which is in a standby status, waiting for receiving either a transmission request or a retransmission request in the Step S202, recognizes that there is a transmission request or a retransmission request, it determines the type of the request signal (Step S203).

If the server unit 300 determines that the request is a transmission request in the Step S203, it selects the video data stored in the video recording device 320 and corresponding to the transmission request by the reader 311 of the transmitter-side processing section 310 and generates video packets 510 to be transmitted on a time division basis. Then, the server unit 300 outputs the generated video packets 510 to the retransmission buffer 312 to temporarily store them there and output from the retransmission buffer 312 to the processing unit 314 (Step S204).

If, on the other hand, the server unit 300 determines in the Step S204 that the request is a retransmission request, it determines that an error has occurred to the video packet information 550 that has been transmitted. Then, the server unit 300 has the retransmission buffer 312 storing the video packet 510 of the transmitted video packet information 550 output the video packet 510 to the processing unit 314 once again (Step S205).

As the video packet 510 is output to the processing unit 314 from the retransmission buffer 312 in the Steps S204 and S205, the clock-time comparator 313 acquires from the client unit 400 the reference clock-time as timed by the timer 410 and recognizes the DTS 513 of the transmission request or the retransmission request. Additionally, the clock-time comparator 313 acquires RTT and computes the retransmission time (3/2)R. Then, the clock-time comparator 313 determines if (T + (3/2)R) > D or not (Step S206).

If the clock-time comparator 313 determines in the Step S206 that (T + (3/2)R) > D, it has the transmitter-side selector 314C of the processing unit 314 output a corresponding signal. Upon receiving the signal, the transmitter-side selector 314C determines that the video packet 510 cannot be retransmitted before it is decoded if a communication error occurs to the transmitted video packet 510 and hence outputs the video packet 510 that is output from the retransmission buffer 312 to the error correction code adding unit 314B for error correction processing (FEC) in the client unit 400 (Step S207).

If, on the other hand, the clock-time comparator 313 determines in the Step S206 that (T + (3/2)R) > D is not true, it has the transmitter-side selector 314C of the processing unit 314 output a corresponding signal. Upon receiving the signal, the transmitter-side selector 314C determines that there is sufficient time for decoding if a communication error occurs and it has to retransmit a video packet. Therefore, it outputs the video packet 510 that is output from the retransmission buffer 312 to the error detection code adding unit 314A for the purpose of retransmission processing (ARQ) at the client unit 400, using an error detection code 530 whose data volume is by far smaller than that of an error correction code 540 (Step S208). If the transmission request acquired in the Step S206 is a request for data, it means that video data are requested for the first time and hence not accompanied by any DTS 513. Thus, the clock-time comparator 313 cannot acquire any DTS 513 and therefore it cannot determine if (T + (3/2)R) > D holds true or not in the Step S206. In other words, it determines that (T + (3/2)R) > D does not hold true so that it proceeds to the Step S208.

Then, the video packet 510 is output to the error correction adding unit 314B in the Step S207 and then a flag 520 of "1" and an error correction code 540 are added to the video packet 510 to produce video packet information 560 to be transmitted (Step S209). Thereafter, the generated video packet information 560 that is to be transmitted is actually transmitted from the synthetic transmitter 314D to the client unit 400 via the network 200 (Step S210). After the transmission of the video packet information 560 in the Step S210, the server unit 300 returns to the Step S201 to go back to the standby status so as to be ready for an operation of transmitting the next video packet 510 or a new video packet 510 or retransmitting the transmitted video packet.

If, on the other hand, the video packet 510 is output to the error detection code adding unit 314A in the Step S208, a flag 520 of "0" and an error detection code 530 are added to it to generate video packet information 550 to be transmitted (Step S211). Thereafter, the generated video packet information 550 that is to be transmitted is actually transmitted from the synthetic transmitter 314D to the client unit 400 via the network 200 in the Step S210 and then the server unit 300 returns to the Step S201.

(Effects and Advantages of Data Transmission/Reception System)

As described above, with the above-described first embodiment, the clock-time comparator 313 acquires processing time information on the time necessary for decoding a video packet 510 for the purpose of utilizing it, or the scheduled decoding clock-time information, and RTT that is communication time information necessary when transferring the video packet 510 and computes the retransmission time (3/2)R necessary for retransmission of the video packet 510 on the basis of the RTT. Then, if it determines that it cannot meet the scheduled decoding clock-time information of the video packet 510 if it retransmits the video packet 510, it has the processing unit 314 add an error correction code 540 to the video packet 510 and transmit it. On the other hand, if it determines that it can meet the scheduled decoding clock-time of the video packet 510 if it retransmits the video packet 510, it has the processing unit 314 add an error detection code 530 to the video packet 510 and transmit it. More specifically, it acquires the current clock-time that is to be used when the video packet 510 is processed in the client unit 400 from the clock-time comparator 313 and it determines that it cannot meet the scheduled decoding clock-time information if the clock-time after the elapse of the retransmission time (3/2)R is behind the scheduled decoding clock-time information ((T + (3/2)R) > D) as computed on the basis of the current clock-time but otherwise it determines that it can meet the scheduled decoding clock-time information. Thus, it operates so as to have the client unit 400 operate either for retransmission (ARQ) or for error correction (FEC).

With this arrangement, if compared with a conventional arrangement of using either ARQ or FEC for processing depending on the type of data to be transmitted/received, it is possible for the above described embodiment to use ARQ that involves only a small quantity of data when it can meet the scheduled clock-time, taking the condition of communication into consideration, so that it uses FEC only when it cannot meet the temporal deadline. Thus, it is possible to reduce the load of communication and minimize the operation of the error corrector 423 that has a complex configuration and requires a large volume of data to be used for computations. Then, the net result will be a remarkably improved efficiency of operation. Therefore, it is easy to process data smoothly and efficiently without interruptions even in the case of a series of stream data that are typically used for images and music and require real time processing. Additionally, since either ARQ or FEC is used selectively for data transmission/reception depending on the condition of communication, the embodiment can accommodate a situation where different transmission/reception techniques are involved as shown in FIGS. 4 and 5 to improve its general purpose characteristics. It should be emphasized that the embodiment can accommodate a data transmission/reception technique as shown in FIG. 5, with which the volume of data to be transmitted/received and the transmission speed are made to vary depending on the processing capacity of the client unit 400. Thus, it will be appreciated that this embodiment can transmit/receive data highly efficiently.

Additionally, the clock-time for processing video data 511 that is timed at the client unit 400 is used as reference clock-time of the data transmission/reception system 100 and the server unit 300 is made to acquire it and determines if it can meet the scheduled decoding clock-time information or not. In other words, the operation of the server unit 300 and the timing of processing are synchronized by the clock-time that is timed at the client unit 400. Thus, it is easy to process data smoothly, efficiently and reliably without interruptions even in the case of a series of stream data that are typically used for images and music and require real time processing.

Still additionally, the retransmission time (3/2) R is computed on the basis of RTT and compared with the scheduled decoding clock-time information for processing when using FEC. Therefore, it is easy to process data in a simple manner easily and smoothly without interruptions even when real time processing is required.

Still additionally, an error detection code adding unit 314A and an error correction code adding unit 314B are provided and operated selectively by means of the transmitter-side selector on the basis of the outcome of comparison. Thus, it is possible to transmit/receive information smoothly with a simple arrangement even in the case of information that requires real time processing.

Furthermore, since a flag 520 is added to the leading end of each video packet, when the client unit 400 receives transmitted video packet information 550 or 560, it can immediately determine whether it has to process the data by using ARQ or FEC to quickly operate for information processing.

Finally, if the received video packet cannot be repaired by using FED, it is possible to request transmission of the next video packet so that the operation of displaying image is not interrupted for the convenience of a client unit user. On the other hand, it is also possible to interrupt the current operation so that, if a program or some other piece of information that should be transmitted without any defect, the client unit can request retransmission.

(2nd Embodiment)

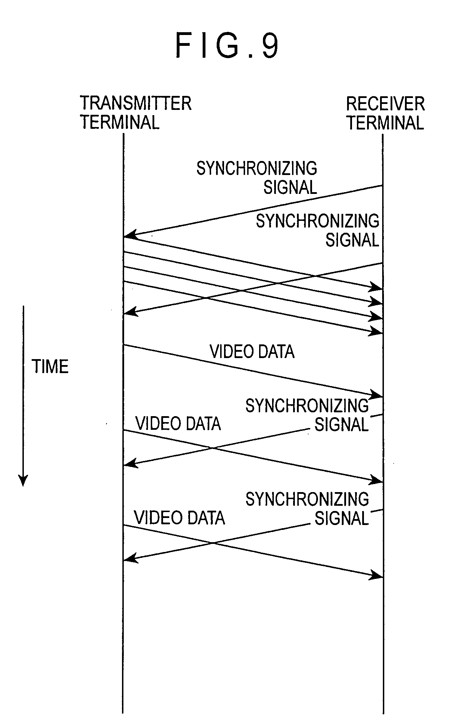

Now, the second embodiment of data processing system according to the present invention, which is also a data transmission/reception system, will be described by referring to the drawings. This second embodiment of data transmission/reception system differs from the above described first embodiment in that the arrangement of switching from ARQ to FEC or vice versa on the basis of the scheduled decoding clock-time information that is the clock-time when video data are decoded is replaced by an arrangement of switching from ARQ to FEC or vice versa in which the stored data volume utilized to determine the timing of processing video data. The system configuration of the second embodiment is substantially the same as that of the first embodiment that is illustrated in FIG. 1. Therefore, the components that are the same as those of the first embodiment will not be described any further. FIG. 9 is a sequence diagram illustrating a state of transmission/reception of information in the second embodiment.

The information requesting unit 440 of the client unit 400 of this embodiment is adapted to transmit information on the stored data volume in the decoder buffer 431 to the server unit 300 via the network 200, for example, at regular intervals referring to a reference clock-time, or irregularly so that the server unit 300 may acquire it in addition to the operation of transmitting a transmission request signal or a retransmission request signal of its counterpart of the above-described first embodiment. More specifically, the information requesting unit 440 acquires the volume of the data to be output from the information acquiring unit 420 to the decoder buffer 431 of the information processor 430 and the volume of the data output from the decoder buffer 431 to the decoder 432. Then, the information requesting unit 440 computes the stored data volume at the current clock-time as timed by the timer 410. In concrete terms, if the current clock-time is T, the stored data volume at the current clock-time is B(T), the volume of data input to the decoder buffer 431 is a and the volume of data output from the decoder buffer 431 is b, the stored data volume at the current clock-time B(T) is expressed by formula 4 shown below.

[Formula 4]

$$B(T) = \int_0^T a(t)\,dt - \int_0^T b(t)\,dt$$

Then, the information requesting unit 440 adds the information on the stored data volume B(T) that is expressed by the formula 4 to the transmission request signal to be transmitted to the server unit 300 and actually transmits the signal to the server unit 300 via the network 200.

On the other hand, the clock-time comparator 313 of the server unit 300 acquires RTT and, at the same time, it acquires the reference clock-time and the information on the stored data volume B(T) of the decoder buffer 431 from the client unit 400 via the network 200. The clock-time comparator 313 then computes the clock-time that will be reached if the video packet in question is retransmitted on the basis of RTT. If the time of RTT is R, the clock-time that will be reached if the video packet is retransmitted is computed by using (T + R × 1.5).

Then, the clock-time comparator 313 recognizes how the stored data volume is reduced on the basis of the stored data volume B(T). In other words, it computes the stored data volume of the decoder buffer 431 when the video packet 510 cannot be stored in the decoder buffer 431 because of a communication error while retransmitting from time T. The stored data volume B(T + (3/2)R) of the decoder buffer 431 when the video packet 510 cannot be stored in the decoder buffer 431 can be computed by using formula 1 shown below.

[Formula 1]

$$B\left(T + \frac{3}{2}R\right) = \int_0^T a(t)\,dt - \int_0^{T+\frac{3}{2}R} b(t)\,dt$$

Then, the clock-time comparator 313 determines in a manner as expressed by formulas 2 and 3 shown below on the basis of the outcome of the computation, using the formula 1.

[Formula 2]

$$B\left(T + \frac{3}{2}R\right) = \int_0^T a(t)\,dt - \int_0^{T+\frac{3}{2}R} b(t)\,dt < 0$$

[Formula 3]

$$B(T + \frac{3}{2}R) = \int_0^T a(t)dt - \int_0^{T+\frac{3}{2}R} b(t)dt \geqq 0$$

If the clock-time comparator 313 determines that the stored data volume is reduced to nil while retransmitting the video packet 510 as indicated by the formula 2, it outputs a signal for driving the transmitter-side selector 314C to select the error correction code adding unit 314B to operate. If, on the other hand, the clock-time comparator 313 determines that the stored data volume is not reduced to nil while retransmitting the video packet 510 as indicated by the formula 3 or video data that are not stored are requested for the first time and hence no information on the stored volume can be acquired so that the state as expressed by the formula 2 does not arise, it outputs a signal for driving the transmitter-side selector 314C to select the error detection code adding unit 314A. Then, as in the case of the first embodiment, the processing unit 314 operates for selecting either ARQ or FEC according to the signal from the clock-time comparator 313.

Thus, the clock-time comparator 313 transmits information on the stored data volume on the basis of the reference clock-time that is used by the terminal 400 for processing video data so as to synchronize the clock-time of the client unit 400 and that of the server unit 300 as shown in FIG. 9. Then, the server unit 300 controls the operation of switching from ARQ to FEC or vice versa, judging the situation where the stored data volume is reduced, according to the information on the stored data volume from the client unit 400. Thus, as shown in FIG. 9, it is possible for the server unit 300 to transmit video packets 510 at different timings.

As described above in detail, with the second embodiment, the clock-time comparator 313 acquires information on the processing time necessary for decoding data in order to utilize a video packet, or information on the stored data volume B(T) in the decoder buffer 431 at time T, and RTT that is information on the communication time necessary when transferring the video packet 510. Then, the clock-time comparator 313 uses the formula 1 to compute how the stored data volume B(T + (3/2)R) in the decoder buffer 431 will be reduced in the communication time (T + (3/2)R) that is spent for the retransmission on the basis of RTT and it has the processing unit 314 add an error correction code 540 to the video packet 510 before transmitting the video packet 510 if the state of formula 2 is expected and hence the stored data volume is reduced to nil and the retransmission of data is not completed in time, whereas it has the processing unit 314 add an error detection code 530 to the video packet 510 before transmitting the video packet 510 if the state of formula 3 is expected and hence the stored data volume is not reduced to nil while retransmitting the data.

Thus, as in the case of the first embodiment, ARQ processing using an error detection code 530 that involves a small amount of data is employed when the retransmission of data will be completed in time, whereas FEC processing is employed only when the retransmission of data will not be completed in time. Thus, it is possible to reduce the load of communication and minimize the operation of the error corrector 423 that has a complex configuration and requires a large volume of data to be used for computations. Then, the net result will be a remarkably improved efficiency of operation. Therefore, it is easy to process data smoothly and efficiently without interruptions even in the case of a series of stream data that are typically used for images and music and require real time processing. Additionally, since either ARQ or FEC is used selectively for data transmission/reception depending on the condition of communication, the embodiment can accommodate a situation where different transmission/reception techniques are involved as shown in FIGS. 4 and 5 to improve its general purpose characteristics. It should be emphasized that the embodiment can accommodate a data transmission/reception technique as shown in FIG. 5, with which the volume of data to be transmitted/received and the transmission speed are made to vary depending on the processing capacity of the client unit 400.

Either ARQ or FEC is selected depending on if the stored data volume is reduced to nil or not as determined on the basis of the stored data volume in the decoder buffer 431 from time T and the communication time necessary for retransmission by using the formulas 2 and 3. Thus, it is easy to process data smoothly and reliably without interruptions even in the case of information that requires real time processing.

Still additionally, as in the case of the first embodiment, an error detection code adding unit 314A and an error correction code adding unit 314B are provided and operated selectively by means of the transmitter-side selector on the basis of the outcome of comparison. Thus, it is possible to transmit/receive information smoothly with a simple arrangement even in the case of information that requires real time processing. Furthermore, since a flag 520 is added to the leading end of each video packet, when the client unit 400 receives a transmitted video packet information 550 or 560, it can immediately determine whether it has to process the data by using ARQ or FEC to quickly operate for information processing.

[Other Embodiments]

The present invention is by no means limited to the above described embodiments, which may be modified or altered in various different ways without departing from the scope of the present invention as discussed below.

Information to be transmitted and received for the purpose of the present invention is not limited to video data and may alternatively be information of any other type. If information in the form of a program, pieces of software and control signals is to be handled, then the clock-time when, for example, the program is installed or a device connected to the system is driven to operate by a control signal may be used as clock-time information, or processing time information, so that the processing unit 314 may select the processing condition for using ARQ or FEC. In short, for the purpose of the present invention, information and hence the time necessary for information processing is not limited to decoding.

While either ARQ or FEC is used depending on if (T + (3/2)R) > D or not in the case of the first embodiment and if a state as expressed by the formula 2 takes place or not in the case of the second embodiment, the present invention is by no means limited thereto. Any other technique may be used to determine if the retransmission of data is completed in time or not. In short, it is only necessary to acquire information that matches the technique to be used to recognize if ARQ or FEC is to be used.

For the purpose of the present invention, any data transmission/reception technique may be used. In short, a technique that does not use packets may alternatively be employed.

While a server unit 300 and a client unit 400 are connected to each other via a network 200 in the above described data processing system, which is a data transmission/reception system 100, the present invention is by no means limited thereto. For example, the use of a computer as means of computation, the use of a program for causing a computer to execute the above described operations and a recording medium storing such a program are also within the scope of the present invention. The above description also applies to the server unit 300 and the client unit 400 that are information processing devices. If a computer is used as means of computation, it is not limited to a personal computer and an arrangement of connecting a plurality of computers to form a network and the use of a device such as microcomputer or a circuit substrate carrying a plurality of electronic parts are also within the scope of the present invention.

The specific configuration and procedure that are used for the purpose of the present invention can be appropriately selected and modified without departing from the scope of the present invention.

[Effects and Advantages of Embodiments]

As described above, the above-described embodiments are adapted to acquire the scheduled decoding clock-time information that relates to the time necessary for processing a video packet 510 and RTT that relates to the communication time necessary for transferring the video packet and compute the time required for retransmission of the video packet 510 by using RTT. An error correction code 540 is added to the video packet 510 and the video packet 510 is transmitted if it is determined that the retransmission of the video packet will not be completed in time, whereas an error detection code 530 is added to the video packet 510 and the video packet 510 is transmitted if it is determined that the retransmission of the video packet will be completed in time. Thus, FEC is used for processing only when the retransmission will not be completed in time if ARQ is used because ARQ involves only a small amount of data whereas FEC is complex and involves a large volume of data for computations. Therefore, it is possible to reduce the load of communication and minimize the use of FEC to easily improve the processing efficiency. Thus, it is easy to process data smoothly and efficiently without interruptions even in the case of a series of stream data that are typically used for images and music and require real time processing.

**Claims**

1. An information processing device for transmitting information via a network, **characterized by**
   acquiring a time necessary for processing information and a communication time necessary for transferring the information;
   computing a time necessary for retransmitting the information on the basis of the communication time; and
   transmitting the information with an error correction code added thereto when it is determined that the retransmission time exceeds the time necessary for processing the information, but transmitting the information with an error detection code added thereto when it is determined that the retransmission time does not exceed the time necessary for processing the information.

2. The device according to claim 1, **characterized in that**

the time necessary for processing the information relates to a clock-time for utilizing the information.

**3.** The device according to claim 1, **characterized in that**
the time necessary for processing the information relates to a clock-time when a stored volume of the information to be used for the information processing falls under a predetermined level according to a data on the stored volume.

**4.** An information processing device for transmitting information via a network, comprising:

a clock-time acquiring unit for acquiring a clock-time for utilizing the information;
a communication time acquiring unit for acquiring a communication time necessary for transferring the information;
a clock-time comparator for computing a time necessary for retransmitting the information on the basis of the communication time and comparing the retransmission time and the utilization clock-time; and
an information processor adapted to add an error correction code to the information when it is determined that the retransmission time exceeds the utilization clock-time as a result of the comparison by the clock-time comparator, but add an error detection code to the information when it is determined that the retransmission time does not exceed the utilization clock-time.

**5.** The device according to claim 4, further comprising a reference clock-time acquiring unit for acquiring a reference clock-time,
wherein the clock-time comparator computes the retransmission time starting from the reference clock-time and compares the retransmission time and the utilization clock-time relative to the reference clock-time.

**6.** The device according to claim 5, **characterized in that**
the reference clock-time acquiring unit acquires a clock-time at a destination of the transmission of the information for timing the utilization clock-time as the reference clock-time.

**7.** The device according to claim 5 or 6, **characterized in that**
if the reference clock-time is T, the retransmission time is (3/2R) and the utilization clock-time is D,
the information processor adds the error correction code to the information when $(T + (3/2)R) > D$, but adds the error detection code when $(T + (3/2)R) \leqq D$.

**8.** The device according to any of claims 4 through 7, **characterized in that**
the information processor has an error detection code adding unit adapted to add an error detection code to the information, an error correction code adding unit adapted to add an error correction code to the information and a selector adapted to operate the error detection code adding unit or the error correction code adding unit according to the outcome of comparison of the clock-time comparator.

**9.** An information processing device for transmitting information via a network, comprising:

a stored volume data acquiring unit for acquiring data on a stored volume of the information for the purpose of utilizing the information;
a communication time acquiring unit for acquiring a communication time necessary for transferring the information;
a stored volume recognizer for computing a time necessary for retransmitting the information on the basis of the communication time and recognizing a reduction of the stored volume of the information during the retransmission time on the basis of the stored volume data; and
an information processor adapted to transmit the information with an error correction code added thereto when the stored volume recognizer determines that the reduction of the stored volume of the information is short of a predetermined level, but transmit the information with an error detection code added thereto when the stored volume recognizer determines that the reduction of the stored volume of the information exceeds the predetermined level.

**10.** The device according to claim 9, further comprising a reference clock-time acquiring unit for acquiring a reference clock-time,
wherein the stored volume recognizer computes a retransmission time on the basis of the reference clock-time and also computes a stored volume of the information on the basis of the stored volume data of the information during the retransmission time and recognizes a reduction of the stored volume of the information.

**11.** The device according to claim 10, **characterized in that**
the reference clock-time acquiring unit acquires a clock-time timed at the destination of transmission of the information as a reference clock-time and
the stored volume data acquiring unit acquires a stored volume data on a stored volume at the timed clock-time.

**12.** The device according to claim 10 or 11, **characterized in that**
if the reference clock-time is T, the stored volume at the reference clock-time T is B(T), the volume of input information is a, the volume of output information out of the information stored for utilization is b and the communication time is R,
the stored volume recognizer recognizes the reduction of the stored volume by using a formula 1:

$$B(T + \frac{3}{2}R) = \int_0^T a(t)dt - \int_0^{T+\frac{3}{2}R} b(t)dt$$

**13.** The device according to claim 12, **characterized in that**
the information processor determines that the stored information will be gone as a result of the reduction of the stored volume and transmits the information with an error correction code added when a formula 2:

$$B(T + \frac{3}{2}R) = \int_0^T a(t)dt - \int_0^{T+\frac{3}{2}R} b(t)dt < 0$$

is true, but the information processor determines that the stored information will be secured for utilization and transmits the information with an error detection code added when a formula 3:

$$B(T + \frac{3}{2}R) = \int_0^T a(t)dt - \int_0^{T+\frac{3}{2}R} b(t)dt \geqq 0$$

is true.

**14.** The device according to any of claims 9 through 13, **characterized in that**
the information processor has an error detection code adding unit adapted to add an error detection code to the information, an error correction code adding unit adapted to add an error correction code to the information and a selector adapted to operate the error detection code adding unit or the error correction code adding unit according to the reduction of the stored volume of the information as recognized by the stored volume recognizer.

**15.** The device according to any of claims 1 through 14, **characterized in that**
the information is transmitted in packets containing different volumes of information.

**16.** The device according to any of claims 1 through 15, **characterized in that**
the information is transmitted by packet transmission at different time intervals.

**17.** An information processing device for receiving information via a network, comprising:

an information requesting unit for transmitting a request signal requesting transmission of the information;
a reference clock-time generator for timing a clock-time and transmitting the timed clock-time as reference clock-time to the origin of transmission of the information;
an information acquiring unit for acquiring the information with an error correction code added thereto and the information with an error detection code added thereto and, if the acquired information contains any error, transmitting a retransmission request signal requesting correction of the information on the basis of the error correction code or retransmission of the information on the basis of the error detection code so as to acquire error-free information; and
an information processor for processing the error-free information that is acquired by the information acquiring unit on the basis of the timed clock-time so as to make it utilizable and transmitting a clock-time for utilizing the information to the destination as reference to be used by the origin of transmission to determine if the origin of transmission adds an error correction code or an error detection code to the information before transmitting the information.

**18.** An information processing device for receiving information via a network, comprising:

an information requesting unit for transmitting a request signal requesting transmission of the information;
a reference clock-time generator for timing a clock-time and transmitting the timed clock-time as reference clock-time to the origin of transmission of the information;
an information acquiring unit for acquiring the information with an error correction code added thereto and the information with an error detection code added thereto and, if the acquired information contains any error, transmitting a retransmission request signal requesting correction of the information on the basis of the error correction code or retransmission of the information on the basis of the error detection code so as to acquire error-free information;
an information processor for processing the error-free information on the basis of the timed clock-time so as to make it utilizable; and
an information buffer for temporarily storing the error-free information for the purpose of processing by the information processor and transmitting the stored volume of the error-free information as reference to be used by the origin of transmission to determine if the origin of transmission adds the error correction code or the error detection code to the information before transmitting the information.

**19.** An information processing system, comprising:

an information processing device according to any of claims 1 through 16; and
a client unit connected to the information processing device via the network so as to be able to transmit information to and receive information from the information processing device and adapted to process the information transmitted from the information processing device so as to make it utilizable.

**20.** An information processing system, comprising:

an information processing device according to claim 17; and
a server unit connected to the information processing device via the network so as to be able to transmit information to and receive information from the information processing device and adapted to compare the clock-time transmitted from the information processing device and the retransmission time for retransmitting the information on the basis of the transfer time for transferring the information to the information processing device so as to be received by the information processing device and add an error correction code to the information if it determines that it cannot meet the utilization clock-time with the retransmission time, but add an error detection code to the information if it determines that it can meet the utilization clock-time, before it transmits the information to the client unit.

**21.** An information processing system, comprising:

an information processing device according to claim 18; and
a server unit connected to the information processing device via the network so as to be able to transmit information to and receive information from the information processing device and adapted to recognize the retransmission time for retransmitting the information at the reference clock-time transmitted from the information processing device on the basis of the transfer time for transferring the information to the information processing device so as to be received by the information processing device and, at the same time, the reduction of the stored volume of the information from the reference clock-time on the basis of the stored volume data transmitted from the information processing device and add an error correction code to the information when it is determined that the reduction of the stored volume of the information is short of a predetermined level before transmitting the information to the information processing device, but add an error detection code to the information when it is determined that the reduction of the stored volume of the information exceeds the predetermined level before transmitting the information to the information processing device.

22. An information processing system comprising a server unit for transmitting information with an error correction code or an error detection code added thereto via a network and a client unit for receiving the information to utilize it, **characterized in that**

the server unit has a clock-time acquiring unit for acquiring a clock-time of utilization of the information at the client unit, a transfer time acquiring unit for acquiring a transfer time necessary for transmitting the information to the client unit for reception, a clock-time comparator for computing a retransmission time necessary for retransmitting the information for reception on the basis of the transfer time and comparing the retransmission time and the clock-time of utilization, and an information processor adapted to transmit the information with an error correction code added thereto upon determining that the retransmission time outgoes the clock-time of utilization as a result of comparison of the clock-time comparator, but transmit the information with an error detection code added thereto upon determining that the retransmission time falls short of the clock-time of utilization as a result of comparison, and

the client unit has an information requesting unit for transmitting a request signal requesting transmission of the information to the server unit, a reference clock-time generator for timing a reference clock-time to be used as reference for the clock-time of utilization and transmitting it to the server unit, an information acquiring unit for acquiring the information with the error correction code added thereto and the information with the error detection code added thereto and, if the acquired information contains any error, transmitting a retransmission request signal requesting correction of the information on the basis of the error correction code or retransmission of the information on the basis of the error detection code to acquire error-free information and an information processor for utilizing the error-free information acquired by the information acquiring unit on the basis of the timed reference clock-time.

23. An information processing system comprising a server unit for transmitting information with an error correction code or an error detection code added thereto via a network and a client unit for receiving the information to utilize it, **characterized in that**

the server unit has a stored volume data acquiring unit for acquiring a stored volume of the information necessary for utilizing the information from a client unit, a transfer time acquiring unit for acquiring a transfer time necessary for transmitting the information, a stored volume recognizer for computing a retransmission time necessary for retransmitting the information for reception on the basis of the transfer time and recognizing a reduction of the stored volume of the information during the retransmission time on the basis of a stored volume data and an information processor adapted to transmit the information with an error correction code added thereto when the reduction of the stored volume of the information is short of a predetermined level, but transmit the information with an error detection code added thereto when the reduction of the stored volume of the information exceeds the predetermined level, and

the client unit has an information requesting unit for transmitting a request signal requesting transmission of the information to the server unit, a reference clock-time generator for timing a clock-time and transmitting the timed clock-time as reference clock-time to the server unit, an information acquiring unit for acquiring the information carrying the error correction code added thereto and the information carrying the error detection code added thereto and, if the acquired information contains any error, transmitting a retransmission request signal requesting correction of the information on the basis of the error correction code or retransmission of the information on the basis of the error detection code to acquire error-free information and an information processor for processing the error-free information so as to make it utilizable on the basis of the timed clock-time and an information buffer for temporarily storing the error-free information so as to be processed by the information processor and transmitting the stored volume of error-free information as reference for the origin of transmission to select either an error correction code or an error detection code to be added to the information for transmission.

24. An information processing method for transmitting information by means of a computer and via a network, comprising:

acquiring a processing time necessary for processing the information and a transfer time necessary for transferring the information;
computing a time necessary for retransmitting the information on the basis of the transfer time; and
transmitting the information with an error correction code added thereto when it is determined that the retransmission time outgoes the time necessary for processing the information, but transmitting the information with an error detection code added thereto when it is determined that the retransmission time falls short of the time necessary for processing the information.

25. An information processing method for transmitting information by means of a computer and via a network, comprising:

acquiring a clock-time for utilizing the information and a transfer time necessary for transferring the information;
computing a time necessary for retransmitting the information on the basis of the transfer time; and
comparing a retransmission time and the clock-time for utilizing the information so as to transmit the information with an error correction code added thereto when it is determined that the retransmission time outgoes the clock-time for utilizing the information as a result of the comparison, but transmit the information with an error detection code added thereto when it is determined that the retransmission time falls short of the clock-time.

26. An information processing method for transmitting information by means of a computer and via a network, comprising:

acquiring data on a stored volume of information for the purpose of utilizing the information and the transfer time necessary for transferring the information;
computing a time necessary for retransmitting the information on the basis of the transfer time and recognizing the reduction in the accumulated volume of information in the retransmission time on the basis of the accumulation data; and
transmitting the information with an error correction code added thereto when the reduction of the stored volume of the information is short of a predetermined level, but transmitting the information with an error detection code added thereto when the reduction of the stored volume of the information exceeds the predetermined level.

27. An information processing method for having a client unit to receive information carrying either an error correction code or an error detection code added thereto from a server unit via a network for utilization, **characterized by**
having the server unit acquire a clock-time for utilizing the information by a processor of the client unit and a transfer time necessary for transmitting the information so as to be received by the client unit on the basis of a reference clock-time as timed by the client unit upon recognizing a request signal from the client unit requesting transmission of the information, and
having the server unit compute a retransmission time necessary for retransmitting the information so as to be received by the client unit on the basis of the transfer time, compare the retransmission time and the clock-time of utilization and add an error correction code to the information when it is determined that the retransmission time outgoes the clock-time for utilizing the information as a result of the comparison and transmit the information to the client unit, but add an error detection code to the information when it is determined that the retransmission time falls short of the clock-time and transmit the information to the client unit.

28. An information processing method for having a client unit to receive information with either an error correction code or an error detection code added thereto from a server unit via a network for utilization, **characterized by**
having the server unit acquire data on a stored volume of information for the purpose of utilization of the information by a processor of the client unit and a transfer time necessary for transferring the information so as to be received by the client unit upon recognizing a request signal from the client unit requesting transmission of the information, and
having the server unit recognize a retransmission time necessary for retransmitting the information so as to be received by the client unit on the basis of the transfer time and the reduction of the stored volume of the information on the basis of the stored volume data, add an error correction code to the information when the reduction in the accumulated volume of the information is short of a predetermined level during the retransmission time and transmit the information to the client unit, but add an error detection code to the information when the reduction in the accumulated volume of the information exceeds the predetermined level and transmit the information to the client unit.

29. An information processing program **characterized by** having a computer to execute an information processing method according to any of claims 25 through 28.

**30.** A recording medium recording an information processing program **characterized by** recording an information processing program according to claim 29 so as to be executable to a computer.

# FIG.1

SCHEDULED DECODING CLOCK-TIME

300

200

100

400

TRANSMISSION REQUEST SIGNAL

RETRANSMISSION REQUEST SIGNAL

440  430

310

313

INFORMATION ACQUISITION SIGNAL

420

INFORMATION PROCESSING SIGNAL

314A

314C

VIDEO PACKET

422

431  432

320

314D

424

DISPLAY

311  312

314B

421  423

410

CLOCK-TIME REFERENCE CLOCK

314

EP 1 503 550 A2

# F I G . 2

# F I G . 3

FIG.4

200

550 (560)

550 (560)

550 (560)

550 (560)

1 2 3 4 5 6 7

# FIG.5

EP 1 503 550 A2

# FIG.6

```
                    ┌─────────┐
                    │  START  │
                    └────┬────┘
                         │  S101
                      ╱──┴──╲        YES
                     ╱ END?  ╲──────────────┐
                      ╲     ╱               │
                       ╲───╱                │
                         │ NO              │
                         │    S102          │
                      ╱──┴──╲               │
              NO     ╱  ANY  ╲              │
          ┌────────╱ SPACE IN ╲             │
          │        ╲ DECODING ╱         ┌───┴───┐
          │         ╲ BUFFER?╱          │  END  │
      S103│          ╲──┬──╱            └───────┘
          │             │ YES
┌─────────┴──────┐  ┌───┴──────────┐
│TRANSMIT DATA OF│  │ TRANSMIT     │ S104
│DECODING BUFFER │  │ TRANSMISSION │
│TO DECODER      │  │ REQUEST      │
└────────────────┘  └───┬──────────┘
```

TRANSMIT DATA OF DECODING BUFFER TO DECODER — S103

TRANSMIT TRANSMISSION REQUEST — S104

VIDEO PACKET RECEIVED ? — S105

TYPE OF VIDEO PACKET ? — S106

ARQ

FEC

TRANSMIT VIDEO PACKET TO ERROR DETECTOR — S107

TRANSFER VIDEO PACKET TO ERROR CORRECTOR — S115

DETECT ERROR — S108

CORRECT ERROR — S116

ERROR DETECTED ? — S109

NO

YES

TRANSMIT RETRANSMISSION REQUEST — S111

STORE RECEIVED DATA IN DECODING BUFFER — S110

# FIG.7

START

ANY TRANSMISSION REQUEST OR RETRANSMISSION REQUEST ? — S201

NO

PREDETERMINED TIME ELAPSED? — S202

NO

YES

YES S203
RECEPTION OF TRANSMISSION REQUEST

DETERMINE TYPE OF REQUEST SIGNAL

RECEPTION OF RETRANSMISSION REQUEST

S205

TRANSFER DATA CORRESPONDING TO REQUEST FROM RETRANSMISSION BUFFER TO PROCESSING UNIT

S204

READ DATA CORRESPONDING TO REQUEST AND TRANSFER FROM RETRANSMISSION BUFFER TO PROCESSING UNIT

$T + \frac{3}{2} R > D$ — S206

NO

(ARQ) — S208

TRANSFER DATA TO ERROR DETECTION CODE ADDER

YES

(FEC)

TRANSFER DATA TO ERROR CORRECTION CODE ADDER — S207

S211 — ADD ERROR DETECTION CODE

ADD ERROR CORRECTION CODE — S209

TRANSMIT VIDEO PACKET TO NETWORK — S210

END

# FIG.8

TRANSMITTER TERMINAL     RECEIVER TERMINAL     CLOCK-TIME T

USE ARQ (D = 0)
ADD ERROR DETECTION CODE
(S211)

USE ARQ (D = 1)
ADD ERROR DETECTION CODE
(S211)

USE FEC (D = 1)
ADD ERROR CORRECTION CODE
(S209)

USE FEC (D = 2)
ADD ERROR CORRECTION CODE
(S209)

S104   VIDEO PACKET   S104   S210

VIDEO PACKET   S108   ERROR OCCURRENCE

S111

VIDEO PACKET   S104

S210   VIDEO PACKET   S116   ERROR OCCURRENCE

TRANSMISSION
REQUEST
(D = 0)

TRANSMISSION
REQUEST (D = 1)

RECEPTION
SUCCEEDED
(D = 0)

RECEPTION FAILED
(D = 1)
(DETECT ERROR BY
ERROR DETECTION CODE)
RETRANSMISSION
REQUEST(D=1)

TRANSMISSION REQUEST
(D = 2)

RECEPTION SUCCEEDED
(D = 1)

RECEPTION SUCCEEDED
(D = 2)
(REPAIR ERROR BY
ERROR CORRECTION
CODE)

T=0   DECODE VIDEO
PACKET (D = 0)

T=1   DECODE VIDEO
PACKET (D = 1)

T=2   DECODE VIDEO
PACKET (D = 2)

EP 1 503 550 A2

# FIG.9

TRANSMITTER
TERMINAL

RECEIVER
TERMINAL

SYNCHRONIZING
SIGNAL

SYNCHRONIZING
SIGNAL

TIME

VIDEO DATA

SYNCHRONIZING
SIGNAL

VIDEO DATA

SYNCHRONIZING
SIGNAL

VIDEO DATA